# EUROPÄISCHE PATENTSCHRIFT

(11) **EP 3 544 783 B1**
(45) Veröffentlichungstag und Bekanntmachung des Hinweises auf die Patenterteilung: **03.08.2022**
(21) Anmeldenummer: 17822118.0
(22) Anmeldetag: 24.11.2017
(51) Int. Cl.: B29C 44/04, B29C 44/44, B29C 44/60, B29C 39/10, B29C 39/12, B29K 105/04

(54) **VERFAHREN ZUR HERSTELLUNG EINES FORMKÖRPERS**
METHOD FOR PRODUCING A MOULDED BODY
PROCÉDÉ DE FABRICATION D'UN CORPS MOULÉ

(30) Priorität: 24.11.2016 AT 510672016
(43) Veröffentlichungstag der Anmeldung: 02.10.2019
(73) Patentinhaber: Fill Gesellschaft m.b.H., 4942 Gurten (AT)
(72) Erfinder: HOHENSINNER, Heinz, 4981 Reichersberg (AT)
(74) Vertreter: Burger, Hannes
(86) Internationale Anmeldenummer: PCT/AT2017/060314
(87) Internationale Veröffentlichungsnummer: WO 2018/094439

(56) Entgegenhaltungen:
- EP-A1- 0 267 490
- DE-A1- 19 839 458
- DE-A1-102004 039 438
- GB-A- 2 197 659
- US-A- 3 821 341
- US-A- 4 762 654
- US-A- 4 804 506
- US-B1- 6 821 465

## Beschreibung

Die Erfindung betrifft ein Verfahren zur Herstellung zur Herstellung eines Formkörpers, wobei zumindest ein Material in einem Schritt i) als Schüttgut oder in flüssiger Form in einen Formraum eines Formwerkzeuges eingebracht und darin verteilt wird, und in einem Schritt ii) aus dem zumindest einen Material ein einstückiger Körper gebildet wird.

Weiters betrifft die Erfindung eine Vorrichtung zur Herstellung eines Formkörpers.

Verfahren der eingangs genannte Art sind beispielsweise aus der GB 2 007 579 A, und der US 3,971,471 A bekannt geworden. Mit diesen Verfahren werden Formkörper aus einem Partikelschaum hergestellt, die einen homogenen Aufbau aufweisen. Nachteilig an den bekannten Verfahren ist, dass sie nicht gut dazu geeignet sind, einen einstückigen Formkörper mit lokal unterschiedlichen Eigenschaften herzustellen. Um einen Körper mit lokal unterschiedlichen Eigenschaften herzustellen werden üblicherweise entsprechende Einzelkomponenten hergestellt und zu dem Körper zusammengesetzt, wodurch der Herstellungsprozess aufwendig und kostenintensiv ist.

Ein weiteres Verfahren der eingangs genannten Art, ist aus der US 3 821 341 A bekannt geworden.

Es ist daher eine Aufgabe der Erfindung, die Nachteile des Stands er Technik zu überwinden und eine einfache und kostengünstige Herstellung eines Formkörpers mit lokal unterschiedlichen Eigenschaften zu ermöglichen.

Diese Aufgabe wird mit einem Verfahren der eingangs genannten Art dadurch gelöst, dass das zumindest eine Material drucklos in den Formraum eingebracht wird und der Formraum in unterschiedliche Bereiche unterteilt wird, wobei basierend auf einem Konstruktionsmodell des Formkörpers diesen Bereichen Konzentrationen des zumindest einen Materials und Werte zumindest eines Prozessparameters zugeordnet werden, wobei in Schritt i) das zumindest eine Material entsprechend den zugeordneten Konzentrationen in dem Formraum verteilt und in Schritt ii) und/oder Schritt i) der zumindest eine Prozessparameter gemäß den vorgegebenen Werten eingestellt wird, wobei der zumindest eine Prozessparameter eine thermodynamische Zustandsgröße ist.

Durch die selektive Verteilung des Materials in dem Formraum und die lokal selektive Änderung der Werte der Prozessparameter lässt sich ein Formkörper schaffen, der lokal sehr unterschiedliche Eigenschaften, beispielsweise hinsichtlich seiner Dichte, Elastizität, Oberflächenbeschaffenheit aufweist. Das erfindungsgemäße Verfahren erlaubt somit die einfache Herstellung eines Formkörpers mit lokal unterschiedlichen Eigenschaften in einem einzigen Stück. Durch die einstückige Ausbildung des erfindungsgemäßen Formkörpers wird auch die mechanische Stabilität des Formkörpers gegenüber herkömmlichen Lösungen, bei welchen Einzelteile zu dem Körper zusammengesetzt werden, wesentlich erhöht, da Schnittstellen zwischen den Einzelteilen wegfallen.

Gemäß einer vorteilhaften Variante der Erfindung ist es vorgesehen, dass der zumindest eine Prozessparameter Temperatur und/oder Druck ist.

Bei einer bevorzugten Variante der Erfindung kann ein Einstellen des zumindest einen Prozessparameters durch elektromagnetische Strahlung, insbesondere IR-Strahlung, erfolgt und/oder durch Konvektion und/oder Konduktion und/oder Veränderung eines Drucks erfolgen.

Vorteilhafterweise erfolgt ein Einbringen der Materialien in den Formraum entweder schichtweise und/oder durch Schüttung.

Ein Formkörper mit sehr exakt definierten Eigenschaften lässt sich dadurch erreichen, dass das zumindest eine Material in dem Formraum gezielt positioniert verteilt wird.

Zur Erzielung von lokal unterschiedlichen Eigenschaften des Formkörpers ist es von Vorteil, wenn das zumindest eine Material in Schritt i) ungleichmäßig in dem Formraum verteilt wird, wobei in dem Formraum Bereiche höherer und niedrigerer Konzentration des zumindest einen Materials und/oder Bereiche, die frei sind von dem zumindest einen Material, gebildet werden.

Die Verteilung des Materials kann dadurch erfolgen oder unterstützt werden, dass der Formraum in Schritt i) und/oder Schritt ii) eine oszillierende Bewegung und/oder eine translatorische Bewegung und/oder eine Drehbewegung ausführt, wobei das zumindest eine Material durch die Bewegung des Formraums verteilt wird.

Weiters kann es bei einer vorteilhaften Weiterbildung der Erfindung vorgesehen sein, dass in in Schritt ii) voneinander verschiedene Bereiche von Wänden des Formraums unterschiedlich erwärmt und/oder abgekühlt werden. Bei dieser Variante der Erfindung erfolgt eine Wärmeübertragung auf das Material über die Form.

Alternativ oder zusätzlich kann es vorgesehen sein, dass in Schritt i) und/oder in Schritt ii) unterschiedlichen Bereiche des zumindest einen Materials unterschiedlich erwärmt und/oder abgekühlt werden.

Lokal unterschiedliche Eigenschaften in dem Formkörper lassen sich auch dadurch erzielen, dass in Schritt i) und/oder in Schritt ii) unterschiedliche Bereiche des zumindest einen Materials selektiv geschmolzen und/oder verfestigt werden.

Gemäß einer bevorzugten Weiterbildung des erfindungsgemäßen Verfahrens kann es vorgesehen sein, dass in Schritt i) zumindest ein erstes Material und zumindest ein zweites von dem ersten Material verschiedenes Material in die Form eingebracht werden. Durch die Einbringung unterschiedlicher Materialien können die lokalen Eigenschaften des Formkörpers gezielt beeinflusst und optimiert werden.

In diesem Zusammenhang ist es besonders vorteilhaft, wenn in Schritt i) und/oder in Schritt ii) das zumindest eine zweite Material zumindest teilweise unterschiedlich erwärmt und/oder abgekühlt wird als zumindest Teile des ersten Materials oder, dass das erste Material und das zweite Material zumindest teilweise gleich erwärmt oder abgekühlt werden.

Darüber hinaus kann das zumindest eine zweite Material ungleichmäßig in der Form verteilt werden, wobei in der Form Bereiche höherer und niedrigerer Konzentration des zweiten Materials und/oder Bereiche, die frei sind von dem zweiten Material, gebildet werden.

Als besonders vorteilhaft hat es sich herausgestellt, wenn das zumindest eine in Schritt i) zugeführte Material aus der Gruppe der Kunststoffe oder Kunststoffausgangsprodukte ausgewählt ist, insbesondere aus der Gruppe thermoplastischer, duroplastischer oder elastomerer Kunststoffe. Durch die Verwendung eines oder mehrere der genannten Kunststoffe lassen sich besonders gut Zonen mit den geforderten Eigenschaften in dem Formkörper realisieren. Zudem kann eine einfache Anpassung an unterschiedliche Einsatzbedingungen für den jeweils herzustellenden Formkörper geschaffen werden.

Eine bevorzugte Variante der Erfindung sieht vor, dass der Formraum eine innere Struktur aufweist, welche einer äußeren Struktur des herzustellenden Formkörpers, insbesondere einem Kunststoffprodukt, entspricht. Auf diese Weise kann eine nachträgliche Bearbeitung der äußeren Kontur des Formkörpers, beispielsweise durch Abtragen von Material, entfallen.

Weiters kann vor, während oder nach Schritt i) zumindest ein Einlegeteil, insbesondere zumindest ein Formteil oder Halbzeug, in den Formraum eingelegt werden. Als Einlegeteil(e) bzw. Verstärkungselement(e) können auch Halbzeuge, wie Fasern, Gelege, Gewebe, Textilien, thermoplastisch gebundene Hybridgarne/-netze, etc. in den Formraum eingebracht werden. Dadurch wird es möglich, Anbau- oder Einlegeteile direkt an den und/oder in dem Formkörper im Zuge seiner Herstellung zu integrieren, insbesondere daran anzuformen. Weiters kann damit aber auch eine formschlüssige und/oder stoffschlüssige Verbindung bzw. ein Anhaften zwischen dem Einlegeteil und dem Material des Formkörpers geschaffen werden. Im Sinne einer durchgehenden Verstärkung sowie einer Anbindung von Deck- zu Bodenlagen kann zudem eine durchgehende Verstärkung des Formkörpers angestrebt werden, also nicht nur ein Anformen oder Anhaften. Durch diese Ausführungsform der Erfindung kann eine Funktionalisierung des entstehenden Formkörpers erfolgen.

Die oben genannte Aufgabe lässt sich auch mit einer Vorrichtung der eingangs genannten Art erfindungsgemäß dadurch lösen, dass die Vorrichtung zumindest eine Steuerung und zumindest ein mit der Steuerung in Verbindung stehendes Materialzuführmittel aufweist, wobei die Steuerung dazu eingerichtet ist, anhand einer auf einem Konstruktionsmodell des herzustellenden Formkörpers basierenden Zuordnung von Materialkonzentrationen und/oder Materialzusammensetzungen zu Bereichen des Formraums das zumindest eine Materialzuführmittel zu steuern, wobei die Steuerung weiters dazu eingerichtet ist, mit zumindest einem Stellglied zur Einstellung einer Größe zumindest eines Prozessparameters in einem oder mehreren der Bereiche des Formraums verbunden und dazu eingerichtet ist, das Stellglied gemäß einer zuvor erfolgten Festlegung zumindest eines Sollwertes dieser Größe zu betätigen.

Bei einer vorteilhaften Variante der Erfindung kann es vorgesehen sein, dass das zumindest eine Stellglied eine Temperiervorrichtung und/oder ein Heizelement, insbesondere ein Strahlung emittierendes Heizelement, und/oder ein Druckerzeugungselement zur Erhöhung des Drucks in dem Formraum umfasst.

Zum besseren Verständnis der Erfindung wird diese anhand der nachfolgenden Figuren näher erläutert.

Es zeigen jeweils in stark vereinfachter, schematischer Darstellung:
- Fig. 1: ein Formwerkzeug mit geöffnetem Formraum und darin eingebrachtem Granulat;
- Fig. 2: das Formwerkzeug nach Fig. 1 mit geschlossenem Formraum und dem zum Formkörper verbundenen Granulat, in Ansicht, teilweise geschnitten;
- Fig. 3: ein Zeit- Temperaturdiagramm eines möglichen Fertigungs-Zyklus für den Aufschäum- und Abkühlprozess;
- Fig. 4: eine Ausführungsform eines Formwerkzeuges;
- Fig. 5: einen Formkörper mit Bereichen unterschiedlicher Beschaffenheit;
- Fig. 6: einen Formraum mit darin selektiv verteiltem Material.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

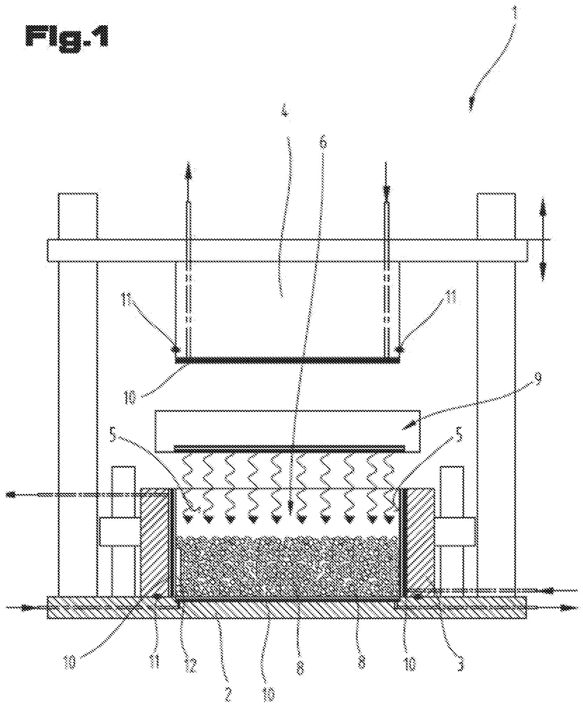

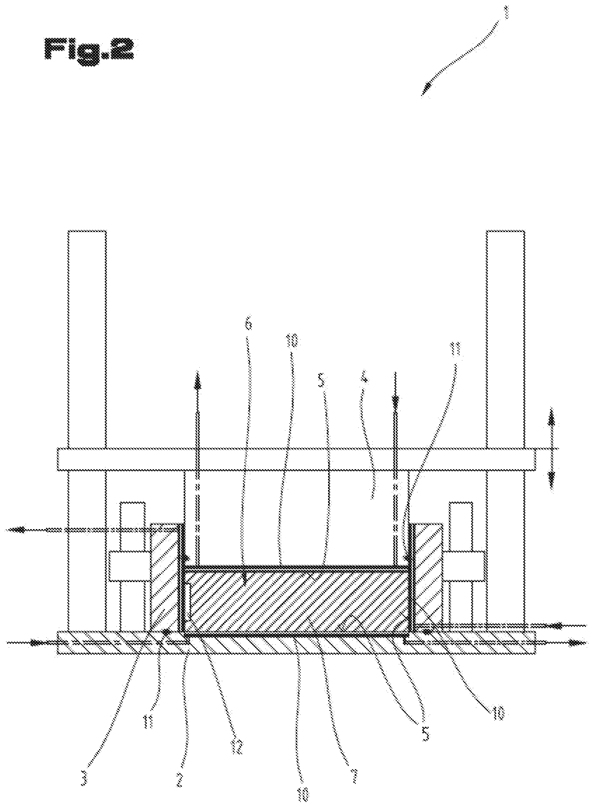

In den Fig. 1 und 2 ist eine Variante eines Formwerkzeugs 1, wie es bei der Erfindung zum Einsatz kommen kann, stark schematisiert dargestellt. Dieses kann aus mehreren Einzelkomponenten gebildet sein. Auf die nähere Darstellung sowie Beschreibung von Führungsvorrichtung sowie Stellvorrichtungen wurde der besseren Übersichtlichkeit halber verzichtet.

Im vorliegenden Ausführungsbeispiel weist das Formwerkzeug 1 eine Basisplatte oder Grundplatte 2, zumindest ein auf der Grundplatte 2 auflagerndes erstes Werkzeugteil 3 sowie zumindest ein relativ dazu verstellbares zweites Werkzeugteil 4 auf. Der erste Werkzeugteil 3 kann z.B. in Form eines umlaufenden Kranzes, gegebenenfalls aus mehreren Einzelkomponenten, ausgebildet sein und einen Aufnahmeschacht ausbilden. Es wären aber auch jegliche anderen Ausbildungen der Werkzeugteile 3, 4 möglich, wobei dies von der herzustellenden Raumform abhängig ist.

In der in der Fig. 2 dargestellten Schließstellung des Formwerkzeugs 1 umgrenzen bzw. definieren Formwände 5 desselben einen Formraum, in welchem mit einer Schraffur eine mögliche Raumform eines darin ausgebildeten Formkörpers 7 angedeutet ist.

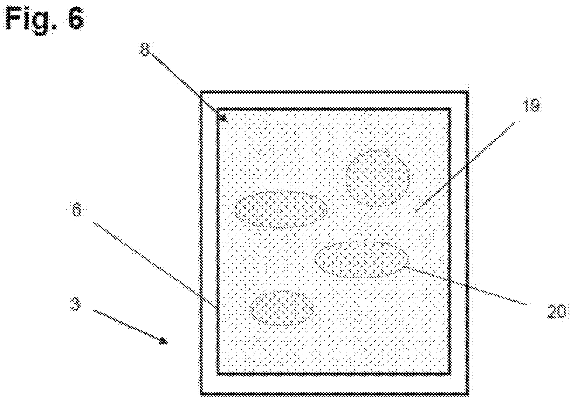

Es ist möglich, dass das Formwerkzeug 1 aus einem ersten Werkzeugteil 3 und einem zweiten Werkzeugteil 4, das vom ersten Werkzeugteil 3 abnehmbar ist, gebildet wird, wobei vorzugsweise das erste Werkzeugteil 3 eine Aufnahme für das Material 8 bildet und das zweite Werkzeugteil 4 einen Deckel oder einen Stempel zum Verschließen der Aufnahme bildet. Es sei jedoch darauf hingewiesen, dass der Werkzeugteil 4 nur optional ist und das Formwerkzeug 1 auch nur aus einem einzigen offenen Werkzeugteil, der beispielsweise wie der Werkzeugteil 3 ausgeführt sein kann, gebildet sein kann. Der Formraum 6 ist bei dieser Variante somit nicht abgeschlossen. Bei dieser Ausführungsform kann das Formwerkzeug 1 wie eine Pfanne ausgebildet sein. Der Formraum 6 wird hierbei durch einen offenen Aufnahmeraum der Pfanne gebildet, wie dies beispielsweise in Fig. 6 dargestellt ist.

Gemäß dem erfindungsgemäßen Verfahren wird zur Herstellung des Formkörpers 7, zumindest ein Material 8 in einem Schritt i) als Schüttgut oder in flüssiger Form drucklos in den Formraum 6 des Formwerkzeuges 1 eingebracht und darin verteilt.

Bevorzugt wird das Material 8 in dem Formraum 6 gezielt positioniert. Hierbei kann das Material 8 in Schritt i) ungleichmäßig in dem Formraum verteilt werden, wobei in dem Formraum Bereiche höherer und niedrigerer Konzentration des zumindest einen Materials und/oder Bereiche, die frei sind von dem zumindest einen Material, gebildet werden.

Ein Einbringen des zumindest einen Materials 8 in den Formraum kann entweder schichtweise, beispielsweise mittels eine 3D-Druckers und/oder durch Schüttung erfolgen.

In einem Schritt ii) wird aus dem zumindest einen Material 8 ein einstückiger Körper gebildet.

Der Formraum 6 wird in unterschiedliche Bereiche unterteilt, wobei basierend auf einem Konstruktionsmodell des Formkörpers 6 diesen Bereichen Konzentrationen des Materials 8 und Werte zumindest eines Prozessparameters zugeordnet werden. Bei den Prozessparametern kann es sich um eine thermodynamische Zustandsgröße, insbesondere Temperatur und/oder Druck handeln.

In Schritt i) wird das zumindest eine Material 8 entsprechend den zugeordneten Konzentrationen in dem Formraum 6 verteilt, wie dies beispielsweise in Fig. 6 dargestellt ist, während in Schritt ii) und/oder Schritt i) der zumindest eine Prozessparameter gemäß den vorgegebenen Werten eingestellt wird, sodass ein bestimmter Zustand, beispielsweise eine bestimmte Temperatur oder ein bestimmter Druck, in dem Bereich hergestellt wird. Somit kann während des Verteilens des Materials 8 oder auch danach beispielsweise die Temperatur in unterschiedlichen Bereichen des Formraums selektiv verändert werden. Bevorzugt werden in Schritt i) und/oder in Schritt ii) unterschiedliche Bereiche des zumindest einen Materials 8 selektiv geschmolzen und/oder verfestigt.

Zur Durchführung des Verfahrens weist eine erfindungsgemäße Vorrichtung neben dem Formwerkzeug 1 eine hier nicht näher dargestellte Steuerung, beispielsweise in Form eines entsprechend programmierten Mikro- oder Signalprozessor, auf. Die Steuerung steht in Verbindung mit einem Materialzuführmittel, beispielsweise einem Roboterarm der mit mittels einer Dosiereinrichtung definierte Materialmengen an vorgegebenen Bereichen des Formraums 6 ablegt. Weiters ist die Steuerung dazu eingerichtet, anhand einer auf dem Konstruktionsmodell des herzustellenden Formkörpers 7 basierenden Zuordnung von Materialkonzentrationen und/oder Materialzusammensetzungen zu Bereichen des Formraums 6 das Materialzuführmittel zu steuern. Dadurch kann eine gewünschte Verteilung des Materials 8 in dem Formraum 6 erzielt werden.

Darüber hinaus ist die Steuerung mit einem Stellglied zur Einstellung einer Größe zumindest eines Prozessparameters in einem oder mehreren der Bereiche des Formraums verbunden.

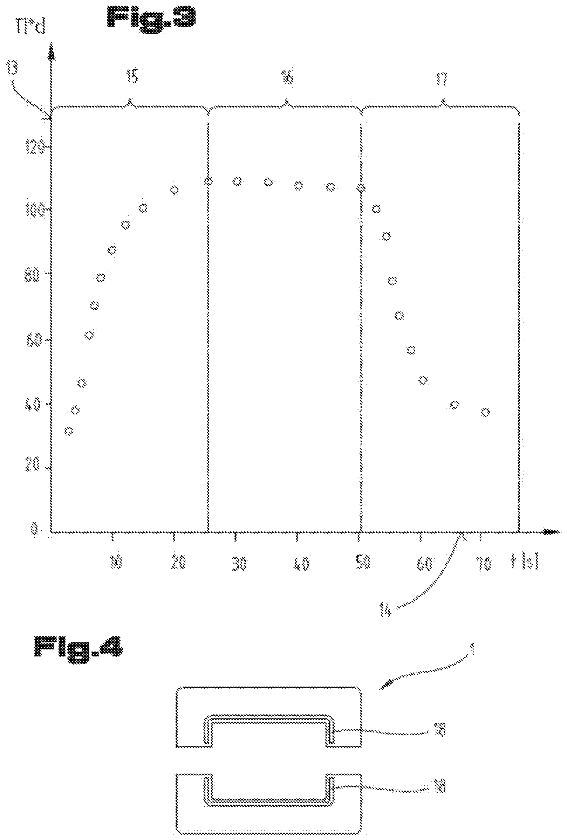

Bei dem Stellmittel kann es sich beispielsweise um Heizelemente 9 oder Temperiervorrichtungen10 handeln. Zudem ist die Steuerung dazu eingerichtet, das Stellglied gemäß einer zuvor erfolgten Festlegung zumindest eines Sollwertes dieser Größe zu betätigen. Ein Einstellen des zumindest einen Prozessparameters erfolgt bevorzugt durch elektromagnetische Strahlung, insbesondere IR-Strahlung, und/oder durch Konvektion und/oder Konduktion. So kann die Steuerung die Temperatur in einem begrenzten Bereich des Formraums 6 örtlich erhöhen oder Verringern. Alternativ oder zusätzlich zur lokalen Veränderung der Temperatur kann auch der Druck zumindest in Teilbereichen des Formraums 6 auf das Material 8 verändert werden. Eine entsprechende Temperaturkurve, welche eine Änderung des Prozessparameters "Temperatur" wiedergibt, ist aus Fig. 4 ersichtlich und weiter unten besprochen.

Zur Veränderung des Drucks kann beispielsweise ein hier nicht dargestellter Stempel oder Schieber oder ein Luftkissen verwendet werden, der örtlich begrenzt einen Druck auf das Material 8 ausübt. Auch ließe sich durch Schließen des Formraums 6 mittels des zweiten, optionalen Werkzeugteils 4 der Druck in dem Formraum 6 erhöhen. Hierbei kann nach dem Verschließen des Formraums 6 das in dem Formraum 6 eingebrachte Material 8 durch das Formwerkzeug 1 zusammengepresst werden, vorzugsweise vor und/oder während des Schrittes ii).

Grundsätzlich können Formkörper 7 mit beliebigen Abmessungen hergestellt werden. So können beispielsweise plattenförmige Bauteile als Formkörper 7 ausgebildet werden, deren Dicke bzw. Stärke z.B. in einem Wertebereich ausgewählt aus einem Bereich mit einem unteren Wert von ca. 1,0 mm und einem oberen Wert von ca. 100 mm liegen können. Darüber hinaus kann der Formraum 6 eine innere Struktur aufweist, welche einer äußeren Struktur des herzustellenden Formkörpers 7 entspricht, wobei die innere Oberfläche des Formraums 6 auf den Formkörper 7 übertragen wird.

Der Formkörper 7 kann aus einem im Formraum 6 schematisch angedeuteten Material 8 gebildet werden.

So kann z.B. das in den Formraum 6 eingebrachte Material 8 durch ein Granulat, Mikrogranulat oder Pulver, gebildet sein. Die Eigenschaften und der Zustand des Material 8 kann durch Einwirkung von Wärme beeinflusst werden, hierzu kann wie dies in der Fig. 1 vereinfacht dargestellt ist, ein Heizelement 9 vorgesehen sein. Das Heizelement 9 kann insbesondere als sogenannter IR-Strahler ausgebildet sein. Die Abkürzung IR steht für Infrarot, wobei diese Strahlung die bekannten Frequenzbereiche zwischen 300 GHz und 400 THz bzw. einen Wellenlängenbereich von 0,1 bis 10µm aufweisen kann. Durch diese Schwingungen werden Moleküle zu Schwingungen und Rotationen angeregt. Der IR-Strahler des Heizelements 9 erzeugt eine Wärmestrahlung, welche durch gewellt verlaufende Pfeile angedeutet ist.

Es könnten aber auch noch Zusätze und/oder Fasermaterialien und/oder Fadenmaterialien in den unterschiedlichsten Werkstoffen sowie Mengenanteilen dem Granulat 8 zur Einbettung im Zuge des Aufschäumvorganges zugemischt werden.

Mittels der eingebrachten Wärmeenergie wird das Material 8 vernetzt und/oder geschmolzen dabei kann der Formkörper 7 in seiner Raumform durch die Geometrie des Formraums 6 ausgebildet werden, wie die allgemein bekannt ist.

Das Erwärmen des Formwerkzeugs 1, insbesondere jener dem Formraum 6 zugewendeten Formwände 5, kann aber auch direkt im Bereich der Formwände 5 selbst erfolgen. Dazu können im Nahbereich der Formwände 5 in den Werkzeugteilen 3, 4 schematisch durch Striche angedeutete Kanäle angeordnet oder ausgebildet sein, welche eine Temperiervorrichtung 10 ausbilden. Die Kanäle bzw. die durch diese gebildete Temperiervorrichtung 10 kann auch noch als Einrichtung 18 zur Erwärmung und/oder Kühlung des Formwerkzeugs 1 bezeichnet werden (siehe auch Fig. 4). Die Zu- sowie Ableitungen in sowie aus den jeweils die Temperiervorrichtung 10 bildenden Kanälen sind schematisch durch strich-punktierte Linien angedeutet. Zumindest die Herstellung der Kanäle am oder im jeweiligen der Werkzeugteile 3, 4 und/oder der Grundplatte 2 kann z.B. generativ erfolgen. Dazu kann ein additives Fertigungsverfahren, wie z.B. ein 3D-Druck, selektives Laserschmelzen oder Lasersintern, Elektronenstrahlschmelzen oder dgl. eingesetzt werden. So kann die Anordnung und Ausbildung der Kanäle sehr oberflächennah bezüglich der Formwände 5 erfolgen, wodurch ein rascher Wärmeübergang von einem durch die Kanäle hindurchströmenden Medium an den Formraum 6 oder von dem im Formraum 6 angeordneten Formkörper 7 an das durch die Kanäle hindurchströmenden Medium erfolgen kann. Damit kann das Erwärmen des Formwerkzeugs 1 im unmittelbaren Nahbereich zumindest einzelner der den Formraum 6 begrenzenden Formwände 5 durchgeführt werden.

Wird durch die Kanäle der Temperiervorrichtung 10 ein Heizmedium, wie z.B. Wasserdampf, Öl oder ein anderes flüssiges und/oder gasförmiges Medium, hindurchgeleitet, wird die zugeführte Wärmeenergie rasch an das Material 8 im Formraum 6 weitergeleitet bzw. abgegeben.

Soll der hergestellte Formkörper 7 für dessen Entnahme aus dem Formraum 6 abgekühlt und damit verfestigt werden, ist ein entsprechendes Kühlmedium, wie z.B. Wasser, Öl oder dergleichen, durch die gleichen Kanäle der Temperiervorrichtung 10 hindurch zu leiten. Damit kann eine selektive Wärmeabfuhr und damit verbundenen Kühlung sowohl des Formraums 6 als auch des darin befindlichen Formkörpers 7 erfolgen.

Wenn der Formkörper 7 für die Entnahme formstabil ist, kann der Formkörper 7 aus dem Formraum 6 entnommen werden.

Um einen unkontrollierten Zutritt sowie auch einen Austritt von Flüssigkeiten und/oder Gasen in und/oder aus dem Formraum 6 während des Herstellungsprozesses zu verhindern, kann der Formraum 6 vor dem Schritt des Erwärmens des Formwerkzeugs zumindest flüssigkeitsdicht gegenüber den Kanälen der Temperiervorrichtung 10 und/oder der äußeren Umgebung verschlossen werden. Dazu können zwischen den Werkzeugteilen 3, 4 sowie der Grundplatte 2 vereinfacht dargestellte Dichtelemente 11 vorgesehen werden. Damit kann auch ein gasdichter Abschluss des Formraums 6 erzielt werden.

Weiters ist noch im linken Teil des Formraums 6 angedeutet, dass im Bereich zumindest einer der Formwände 5 zumindest ein Einlegeteil 12 in den Formraum 6 eingebracht sein kann. Das Einbringen erfolgt bevorzugt vor, während oder nach dem Schritt des Einbringens des Materials 8 in den Formraum 6. Der oder die Einlegeteile 12 können sehr oberflächennah am Formkörper 7 angeordnet sein und/oder auch selbst einen Teilabschnitt seiner äußeren Oberfläche ausbilden. Dazu kann der zumindest eine Einlegeteil 12 an der Formwand 5 positioniert gehalten werden. Dies kann durch die unterschiedlichsten Positioniermittel oder Haltemittel erfolgen, wie diese aus dem Stand der Technik bereits bekannt sind.

Der oder die Einlegeteile 12 können aus den verschiedensten Werkstoffen, insbesondere Metallen, Kunststoffen oder natürlichen Werkstoffen, sowie auch in den unterschiedlichsten Raumformen ausgebildet sein. Weiters wäre es aber auch noch möglich, das Material 8 zur Ausbildung des Formkörpers 7 in zueinander unterschiedlichen Farben und/oder Werkstoffen und/oder mit unterschiedlichen Dichtewerten einzusetzen. Damit können unter anderem optische Gestaltungen des Formkörpers 7 erzielt werden. Weiters lassen sich auch Dichtevariationen innerhalb des Formkörpers 7 erzielen. Als Einlegeteil 12 könnten auch Gewebe, Gewirke oder Geflechte Verwendung finden. Es könnten aber auch Befestigungselemente als Einlegeteile 12 mit in den Formkörper 7 eingebettet oder angeformt werden.

Weiters wäre es noch möglich, dass noch vor dem Schritt des Einbringens des Materials 8 in den Formraum 6 auf zumindest eine der Formwände 5 des Formwerkzeugs 1 eine nicht näher dargestellte Schicht, vorzugsweise mittels Pulverbeschichtung, aufgebracht wird.

Als Werkstoffe für das Material 8 kann dieses beispielsweise aus der Gruppe der Kunststoffe oder Kunststoffausgangsprodukte ausgewählt ist, insbesondere aus der Gruppe thermoplastischer, duroplastischer oder elastomerer Kunststoffe.

In der Fig. 3 ist ein möglicher Temperaturverlauf für eine Temperaturveränderung in einem Bereich einer Formwand 5 des Formwerkzeuges 1 und die nachfolgende Abkühlung in Abhängigkeit von der dafür benötigten Zeit in einem Diagramm für das Formwerkzeug dargestellt. Die Temperaturangaben beziehen sich dabei auf die Temperatur in einem Bereich des Formwerkzeugs 1.

Auf einer Ordinate 13 ist die Temperatur in °Celsius [°C] und auf einer Abszisse 14 die Zeit in Sekunden [s] dargestellt. Das Aufheizen und somit die Wärmezufuhr mittels der Temperiervorrichtungen 10 erfolgt bei diesem Beispiel in etwa über eine Zeitdauer von 25s. Die Temperatur nimmt dabei bis zu einem Wert von ca. 110°C zu. Dieser erste Schritt des Aufheizens ist als erster Abschnitt mit dem Bezugszeichen 15 bezeichnet worden.

In einem darauffolgenden zweiten Abschnitt 16 erfolgt ein Halten in etwa in einem Temperaturbereich zwischen 110°C und 105°C über eine weitere Zeitdauer von ca. 25s. Ab einer bisherigen Gesamt-Zeitdauer von ca. 50s beginnt dann ein dritter Abschnitt 17, der ebenfalls eine weitere Zeitdauer von in etwa 25s in Anspruch nimmt und die Abkühlung eines Abschnittes der Formwand 5 und damit verbunden eines Bereichs des Formkörpers 7 betrifft.

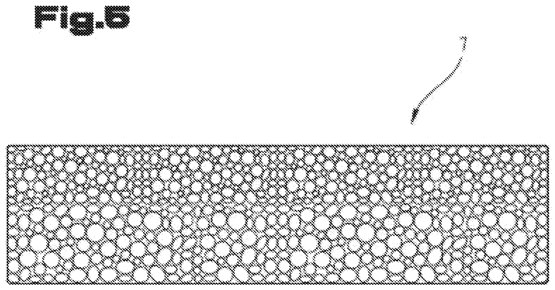

Unterschiedliche Bereiche des Formraums 6 können unterschiedlichen Bedingungen, insbesondere unterschiedlichen Temperaturen und/oder unterschiedlichen Temperaturverläufen ausgesetzt werden. So könnte der untere Bereich aus Fig. 5 höheren Temperaturen und/oder längerer Erwärmung ausgesetzt worden sein als der obere (dichtere) Bereich. Dabei können unterschiedliche, vorzugsweise gegenüberliegende Wände des Formraums 6 unterschiedlich stark und/oder unterschiedliche lange erwärmt werden, um Bereiche unterschiedlicher Eigenschaften in dem Formkörper zu realisieren.

Fig. 4 zeigt eine Ausführungsform eines Formwerkzeuges 1, bei dem die Einrichtung 18 zur Erwärmung und/oder Kühlung innerhalb des Formwerkzeuges 1 integriert ist. Die Einrichtung 18 wird hierdurch in der Wand des Formwerkzeuges 1 verlaufende Heiz-/Kühlkanäle für ein Medium gebildet. Wie aus Fig. 4 zu sehen ist, erstreckt sich zumindest ein überwiegender Teil der Einrichtung 18 (Kanäle) näher an der Innenwand als an der Außenwand des Formwerkzeuges 1. Dadurch werden Wärmeverluste minimiert und die Energieeffizienz erhöht.

Im Folgenden werden bevorzugte Ausführungsformen des Verfahrens dargestellt:
Der Formraum 6 kann während zumindest eines Schrittes des Verfahrens bewegt, vorzugsweise in Rotation versetzt und/oder oszillierend und/oder translatorisch bewegt werden. Bevorzugt wird das Material 8 durch die Bewegung des Formraums 6 in diesem verteilt.

Fig. 5 zeigt eine bevorzugte Ausführungsform, bei der ein Formkörper 7 hergestellt wurde, der aus einem Kunststoffmaterial gebildete Bereiche unterschiedlicher Beschaffenheit aufweist. Der obere Bereich weist eine höhere Dichte auf als der untere Bereich des Formkörpers 7. Eine solche Struktur kann dadurch erreicht werden, dass das in den Formraum 6 des Formwerkzeugs 1 eingebrachte Material 8 zumindest zwei verschiedene Materialien 19, 20 umfasst, wobei sich die Materialien vorzugsweise durch Farbe, Größe, Dichte, Art des Materials voneinander unterscheiden.

Dabei kann, wie in Fig. 6 dargestellt, ein erster Bereich des Formraums 6, vorzugsweise ein erster Raumbereich oder eine Lage, von dem ersten Material 19 eingenommen werden und ein zweiter, vom ersten Bereich unterschiedlicher Bereich des Formraums 6, vorzugsweise, von dem zweiten Material 20, das sich von dem ersten Material 19 unterscheidet, eingenommen werden. Selbstverständlich können zusätzlich auch weitere Bereiche mit weiteren Materialien vorgesehen sein.

Die verschiedenen Materialien 19, 20 können nacheinander, gleichzeitig, beispielsweise übereinander oder an voneinander entfernten Bereichen, in den Formraum 6 eingebracht werden. Bevorzugt wird das zweite Material 20 ungleichmäßig in der Form verteilt, wobei in der Form Bereiche höherer und niedrigerer Konzentration des zweiten Materials 20 und/oder Bereiche, die frei sind von dem zweiten Material 20, gebildet werden. In Schritt i) und/oder in Schritt ii) kann dann das zweite Material 20 zumindest teilweise unterschiedlich erwärmt und/oder abgekühlt werden als zumindest Teile des ersten Materials. Alternativ hierzu können das erste Material 19 und das zweite Material 20 zumindest teilweise gleich erwärmt oder abgekühlt werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Formwerkzeug
- 2: Grundplatte
- 3: erstes Werkzeugteil
- 4: zweites Werkzeugteil
- 5: Formwand
- 6: Formraum
- 7: Formkörper
- 8: Material
- 9: Heizelement
- 10: Temperiervorrichtung
- 11: Dichtelement
- 12: Einlegeteil
- 13: Ordinate
- 14: Abszisse
- 15: erster Abschnitt
- 16: zweiter Abschnitt
- 17: dritter Abschnitt
- 18: Einrichtung zur Erwärmung und/oder Kühlung des Formwerkzeugs 1
- 19: Material
- 20: Material

## Patentansprüche

1. Verfahren zur Herstellung eines Formkörpers (7), wobei zumindest ein Material (8) in einem Schritt i) als Schüttgut oder in flüssiger Form in einen Formraum (6) eines Formwerkzeuges eingebracht und darin verteilt wird, und in einem Schritt ii) aus dem zumindest einen Material (8) ein einstückiger Körper gebildet wird, **dadurch gekennzeichnet, dass** das zumindest eine Material drucklos in den Formraum (6) eingebracht wird und der Formraum (6) in unterschiedliche Bereiche unterteilt wird, wobei basierend auf einem Konstruktionsmodell des Formkörpers (7) diesen Bereichen Konzentrationen des zumindest einen Materials und Werte zumindest eines Prozessparameters, zugeordnet werden, wobei in Schritt i) das zumindest eine Material entsprechend den zugeordneten Konzentrationen in dem Formraum verteilt und in Schritt ii) und/oder Schritt i) der zumindest eine Prozessparameter gemäß den vorgegebenen Werten eingestellt wird, wobei der Prozessparameter zumindest eine thermodynamische Zustandsgröße ist.

2. Verfahren nach Anspruch 1, **dadurch gekennzeichnet, dass** der Prozessparameter Temperatur und/oder Druck ist.

3. Verfahren nach Anspruch 1 oder 2, **dadurch gekennzeichnet, dass** ein Einstellen des zumindest einen Prozessparameters durch elektromagnetische Strahlung, insbesondere IR-Strahlung, erfolgt und/oder durch Konvektion und/oder Konduktion und/oder Veränderung eines Drucks erfolgt.

4. Verfahren nach einem der Ansprüche 1 bis 3, **dadurch gekennzeichnet, dass** ein Einbringen des zumindest einen Materials (8) in den Formraum (6) entweder schichtweise und/oder durch Schüttung erfolgt.

5. Verfahren nach einem der Ansprüche 1 bis 4, **dadurch gekennzeichnet, dass** das zumindest eine Material (8) in dem Formraum (6) gezielt positioniert wird.

6. Verfahren nach Anspruch einem der Ansprüche 1 bis 5, **dadurch gekennzeichnet, dass** das zumindest eine Material (8) in Schritt i) ungleichmäßig in dem Formraum (6) verteilt wird, wobei in dem Formraum (6) Bereiche höherer und niedrigerer Konzentration des zumindest einen Materials und/oder Bereiche, die frei sind von dem zumindest einen Material, gebildet werden.

7. Verfahren nach einem der Ansprüche 1 bis 6, **dadurch gekennzeichnet, dass** der Formraum (6) in Schritt i) und/oder Schritt ii) eine oszillierende Bewegung und/oder eine translatorische Bewegung und/oder eine Drehbewegung ausführt, wobei das zumindest eine Material (8) durch die Bewegung des Formraums (6) verteilt wird.

8. Verfahren nach einem der Ansprüche 1 bis 7, **dadurch gekennzeichnet, dass** in Schritt i) oder in Schritt ii) voneinander verschiedene Bereiche des zumindest einen Materials (8) von Wänden des Formraums (6) unterschiedlich erwärmt und/oder abgekühlt werden.

9. Verfahren nach einem der Ansprüche 1 bis 8, **dadurch gekennzeichnet, dass** in Schritt i) und/oder in Schritt ii) unterschiedlichen Bereiche des zumindest einen Materials (8) unterschiedlich erwärmt und/oder abgekühlt werden.

10. Verfahren nach einem der Ansprüche 1 bis 9, **dadurch gekennzeichnet, dass** in Schritt i) und/oder in Schritt ii) unterschiedliche Bereiche des zumindest einen Materials (8) selektiv geschmolzen und/oder verfestigt werden.

11. Verfahren nach einem der Ansprüche 1 bis 10, **dadurch gekennzeichnet, dass** in Schritt i) zumindest ein erstes Material (19) und zumindest ein zweites von dem ersten Material (19) verschiedenes Material (20) in die Form (6) eingebracht werden.

12. Verfahren nach Anspruch 11, **dadurch gekennzeichnet, dass** in Schritt i) und/oder in Schritt ii) das zumindest eine zweite Material (20) zumindest teilweise unterschiedlich erwärmt und/oder abgekühlt wird als zumindest Teile des ersten Materials (19) oder, dass das erste Material (19) und das zweite Material (20) zumindest teilweise gleich erwärmt oder abgekühlt werden.

13. Verfahren nach Anspruch 11 oder 12, **dadurch gekennzeichnet, dass** das zumindest eine zweite Material ungleichmäßig in der Form verteilt wird, wobei in dem Formraum (6) Bereiche höherer und niedrigerer Konzentration des zweiten Materials (20) und/oder Bereiche, die frei sind von dem zweiten Material (20), gebildet werden.

14. Verfahren nach einem der Ansprüche 1 bis 13, **dadurch gekennzeichnet, dass** zumindest eine in Schritt i) zugeführte Material (8) aus der Gruppe der Kunststoffe oder Kunststoffausgangsprodukte ausgewählt ist, insbesondere aus der Gruppe thermoplastischer, duroplastischer oder elastomerer Kunststoffe.

15. Verfahren nach einem der Ansprüche 1 bis 14, **dadurch gekennzeichnet, dass** der Formraum (6) eine innere Struktur aufweist, welche einer äußeren Struktur des herzustellenden Formkörpers (7), insbesondere einem Kunststoffprodukt, entspricht.

16. Verfahren nach einem der Ansprüche 1 bis 15, **dadurch gekennzeichnet, dass** vor, während oder nach Schritt i) zumindest ein Einlegeteil (12), insbesondere zumindest ein Formteil oder Halbzeug, in den Formraum (6) eingelegt wird.

17. Vorrichtung zur Herstellung eines Formkörpers (7), wobei sie zur Durchführung eines Verfahren nach einem der Ansprüche 1 bis 16 eingerichtet ist, wobei die Vorrichtung zumindest ein Formwerkzeug (1) mit einem Formraum (6) umfasst, die Vorrichtung zumindest eine Steuerung und zumindest ein mit der Steuerung in Verbindung stehendes Materialzuführmittel aufweist, **dadurch gekennzeichnet, dass** rdie Steuerung dazu eingerichtet ist, anhand einer auf einem Konstruktionsmodell des herzustellenden Formkörpers (7) basierenden Zuordnung von Materialkonzentrationen und/oder Materialzusammensetzungen zu Bereichen des Formraums (6) das zumindest eine Materialzuführmittel zu steuern, wobei die Steuerung weiters dazu eingerichtet ist, mit zumindest einem Stellglied zur Einstellung einer Größe zumindest eines Prozessparameters in einem oder mehreren der Bereiche des Formraums (6) verbunden und dazu eingerichtet ist, das Stellglied gemäß einer zuvor erfolgten Festlegung zumindest eines Sollwertes dieser Größe zu betätigen, wobei das zumindest eine Stellglied eine Temperiervorrichtung und/oder ein Heizelement (9) (10), insbesondere ein Strahlung emittierendes Heizelement (9), und/oder ein Druckerzeugungselement zur Erhöhung des Drucks in dem Formraum (6) umfasst.

## Claims

1. A method for producing a molded body (7), wherein at least one material (8) is inserted into a mold space (6) of a molding tool and distributed therein as bulk material or in liquid form in a step i), and a single-piece body is formed of the at least one material (8) in a step ii), **characterized in that** the at least one material is inserted into the mold space (6) without pressure and the mold space (6) is divided into different regions, wherein, based on a construction model of the molded body (7), concentrations of the at least one material and values of at least one process parameter are assigned to these regions, wherein the at least one material is distributed in the mold space according to the assigned concentrations in step i) and the at least one process parameter is set according to the predefined values in step ii) and/or step i), wherein the process parameter is at least one thermodynamic property.

2. The method according to claim 1, **characterized in that** the process parameter is temperature and/or pressure.

3. The method according to claim 1 or 2, **characterized in that** an adjustment of the at least one process parameter is effected by electromagnetic radiation, in particular IR radiation, and/or is effected by convection and/or conduction and/or change of a pressure.

4. The method according to one of claims 1 to 3, **characterized in that** an insertion of the at least one material (8) into the mold space (6) is carried out either layer by layer and/or by pouring.

5. The method according to one of claims 1 to 4, **characterized in that** the at least one material (8) is positioned in the mold space (6) in a targeted manner.

6. The method according to one of claims 1 to 5, **characterized in that** the at least one material (8) is distributed unevenly in the mold space (6) in step i), wherein regions of higher and lower concentrations of the at least one material and/or regions which are free of the at least one material are formed in the mold space (6).

7. The method according to one of claims 1 to 6, **characterized in that** the mold space (6) carries out an oscillating movement and/or a translational movement and/or a rotational movement in step i) and/or step ii), wherein the at least one material (8) is distributed by the movement of the mold space (6).

8. The method according to one of claims 1 to 7, **characterized in that** different regions of the at least one material (8) are differently heated and/or cooled by walls of the mold space (6) in step i) or in step ii).

9. The method according to one of claims 1 to 8, **characterized in that** different regions of the at least one material (8) are differently heated and/or cooled in step i) and/or in step ii).

10. The method according to one of claims 1 to 9, **characterized in that** different regions of the at least one material (8) are selectively melted and/or solidified in step i) and/or in step ii).

11. The method according to one of claims 1 to 10, **characterized in that** at least one first material (19) and at least one second material (20) different from the first material (19) are inserted into the mold (6) in step i).

12. The method according to claim 11, **characterized in that**, in step i) and/or in step ii), the at least one second material (20) is at least partially heated and/or cooled differently than at least parts of the first material (19), or that the first material (19) and the second material (20) are at least partially heated or cooled equally.

13. The method according to claim 11 or 12, **characterized in that** the at least one second material is distributed unevenly in the mold, wherein regions of higher and lower concentrations of the second material (20) and/or regions which are free of the second material (20) are formed in the mold space (6).

14. The method according to one of claims 1 to 13, **characterized in that** the at least one material (8) fed in step i) is selected from the group or plastic materials or plastic base products, in particular from the group of thermoplastic, thermosetting or elastomeric plastic materials.

15. The method according to one of claims 1 to 14, **characterized in that** the mold space (6) has an inner structure which corresponds to an outer structure of the molded body (7), in particular a plastic product, to be produced.

16. The method according to one of claims 1 to 15, **characterized in that** at least one insert (12), in particular at least one molded part or semi-finished product, is inserted into the mold space (6) before, during or after step i).

17. A device for producing a molded body (7), wherein it is configured to perform a method according to one of claims 1 to 16, wherein the device comprises at least one molding tool (1) with a mold space (6), the device comprises at least one controller and at least one material supply means connected to the controller, **characterized in that** the controller in configured to control the material supply means based on an assignment of material concentrations and/or material compositions to regions of the mold space (6) based on a construction model of the molded body (7) to be produced, wherein the controller is further connected to at least one adjusting element for adjusting a value of at least one process parameter in one or multiple regions of the mold space (6) and is configured to actuate the adjusting element according to a previously performed determination of at least one target value of this value, wherein
the at least one adjusting element comprises a temperature control device and/or a heating element (9) (10), in particular a radiation emitting heating element (9) and/or a pressure generating element for increasing the pressure in the mold space (6).

## Revendications

1. Procédé de fabrication d'un corps moulé (7), dans lequel au moins un matériau (8), dans une étape i), est introduit en vrac ou sous une forme liquide dans une cavité de moule (6) d'un outil de moulage et y est réparti et, dans une étape ii), un corps d'une seule pièce est formé à partir de l'au moins un matériau (8), **caractérisé en ce que** l'au moins un matériau est introduit sans pression dans la cavité de moule (6) et la cavité de moule (6) est divisé en différentes zones, dans lequel, sur la base d'un modèle de construction du corps moulé (7), à ces zones, correspondent des concentrations de l'au moins un matériau et des valeurs d'au moins un paramètre de processus, dans lequel, dans l'étape i), l'au moins un matériau est réparti en fonction des concentrations correspondantes dans la cavité de moule et, dans l'étape ii) et/ou l'étape i), l'au moins un paramètre de processus est réglé selon les valeurs prédéterminées, dans lequel le paramètre de processus est au moins une grandeur d'état thermodynamique.

2. Procédé selon la revendication 1, **caractérisé en ce que** le paramètre de processus est la température et/ou la pression.

3. Procédé selon la revendication 1 ou 2, **caractérisé en ce qu'**un réglage de l'au moins un paramètre de processus a lieu par un rayonnement électromagnétique, plus particulièrement un rayonnement IR et/ou par convection et/ou conduction et/ou variation d'une pression.

4. Procédé selon l'une des revendications 1 à 3, **caractérisé en ce qu'**une introduction de l'au moins un matériau (8) dans la cavité de moule (6) a lieu soit par couches et/ou en vrac.

5. Procédé selon l'une des revendications 1 à 4, **caractérisé en ce que** l'au moins un matériau (8) est positionné de manière ciblée dans la cavité de moule (6).

6. Procédé selon l'une des revendications 1 à 5, **caractérisé en ce que** l'au moins un matériau (8) est réparti, dans l'étape i), de manière non uniforme dans la cavité de moule (6), dans lequel, dans la cavité de moule (6) sont formées des zones de concentrations plus ou moins élevées de l'au moins un matériau et/ou des zones qui sont exemptes de l'au moins un matériau.

7. Procédé selon l'une des revendications 1 à 6, **caractérisé en ce que** la cavité de moule (6) effectue, dans l'étape i) et/ou dans l'étape ii), un mouvement oscillant et/ou un mouvement de translation et/ou un mouvement rotatif, dans lequel l'au moins un matériau (8) est réparti par le mouvement de la cavité du moule (6).

8. Procédé selon l'une des revendications 1 à 7, **caractérisé en ce que**, dans l'étape i) ou dans l'étape ii), des zones différentes entre elles de l'au moins un matériau (8) sont chauffées et/ou refroidies différemment par les parois de la cavité du moule (6).

9. Procédé selon l'une des revendications 1 à 8, **caractérisé en ce que**, dans l'étape i) ou dans l'étape ii), différentes zones de l'au moins un matériau (8) sont chauffées et/ou refroidies différemment.

10. Procédé selon l'une des revendications 1 à 9, **caractérisé en ce que**, dans l'étape i) ou dans l'étape ii), différentes zones de l'au moins un matériau (8) sont fondues et/ou solidifiées de manière sélective.

11. Procédé selon l'une des revendications 1 à 10, **caractérisé en ce que**, dans l'étape i), au moins un premier matériau (19) et au moins un deuxième matériau (20), différent du premier matériau (19), sont introduits dans le moule (6).

12. Procédé selon la revendication 11, **caractérisé en ce que**, dans l'étape i) et/ou dans l'étape ii), l'au moins un deuxième matériau (20) est au moins partiellement chauffé et/ou refroidi différemment d'au moins des parties du premier matériau (19) ou **en ce que** le premier matériau (19) et le deuxième matériau (20) sont chauffés ou refroidis de manière au moins partiellement identique.

13. Procédé selon la revendication 11 ou 12, **caractérisé en ce que** l'au moins un deuxième matériau est réparti de manière non uniforme dans le moule, dans lequel, dans la cavité du moule (6), sont formées des zones de concentration plus ou moins élevées du deuxième matériau (20) et/ou des zones qui sont exemptes du deuxième matériau (20).

14. Procédé selon l'une des revendications 1 à 13, **caractérisé en ce qu'**au moins un matériau (8) introduit à l'étape i) est sélectionné dans le groupe des matières plastiques ou des matériaux de base des matières plastiques, plus particulièrement dans le groupe des matières plastiques thermoplastiques, thermodurcissables ou élastomères.

15. Procédé selon l'une des revendications 1 à 14, **caractérisé en ce que** la cavité du moule (6) présente une structure interne qui correspond à une structure externe du corps moulé (7) à fabriquer, plus particulièrement un produit en matière plastique.

16. Procédé selon l'une des revendications 1 à 15, **caractérisé en ce que** avant, pendant ou après l'étape i), au moins un insert (12), plus particulièrement au moins une pièce moulée ou une ébauche, est introduit dans la cavité du moule (6).

17. Dispositif pour la fabrication d'un corps moulé (7), dans lequel il est conçu pour l'exécution d'un procédé selon l'une des revendications 1 à 16, dans lequel le dispositif comprend au moins un outil de moulage (1) avec une cavité de moule (6), le dispositif comprenant au moins une commande et au moins un moyen d'introduction de matériau en liaison avec la commande, **caractérisé en ce que** la commande est conçue pour contrôler, à l'aide d'une correspondance de concentrations de matériaux et/ou de compositions de matériaux avec des zones de la cavité du moule (6), basée sur un modèle de construction du corps moulé (7) à fabriquer, l'au moins un moyen d'introduction de matériau, dans lequel la commande est reliée avec au moins un organe de réglage pour le réglage d'une valeur d'au moins un paramètre de processus dans une ou plusieurs des zones de la cavité de moule (6) et est conçue pour actionner l'organe de réglage selon une détermination préalable d'au moins une valeur de consigne de cette valeur, dans lequel
l'au moins un organe de réglage comprend un dispositif de réglage de la température et/ou un élément chauffant (9) (10), plus particulièrement un élément chauffant (9) émettant un rayonnement et/ou un élément de production de pression pour l'augmentation de la pression dans la cavité du moule (6).
